# FASCICULE DE BREVET EUROPEEN

(11) **EP 0 447 312 B1**
(45) Date de publication et mention de la délivrance du brevet: **05.07.1995**
(21) Numéro de dépôt: 91400670.5
(22) Date de dépôt: 12.03.1991
(51) Int. Cl.: G07B 15/02, G07F 7/00

(54) **Système de gestion par supports d'informations du stationnement payant de véhicules**
Verwaltungssystem mit Informationsträgern für Autoparkgebühren
Management system with information carriers for vehicle parking fees

(30) Priorité: 15.03.1990 FR 9003313
(43) Date de publication de la demande: 18.09.1991
(73) Titulaire: SCHLUMBERGER INDUSTRIES, F-92120 Montrouge (FR)
(72) Inventeur: Fillod, Maurice, F-25000 Besançon (FR); Eonnet, Yves, F-78860 Saint-Nom-La-Bretèche (FR)
(74) Mandataire: Dronne, Guy

(56) Documents cités:
- EP-A- 0 206 884
- EP-A- 0 320 336
- FR-A- 2 600 448
- US-A- 4 379 334

## Description

La présente invention a pour objet un système de gestion, par supports d'informations, du stationnement payant de véhicules.

De façon plus précise l'invention concerne un tel système dans lequel l'automobiliste acquitte le droit de stationnement à l'aide d'une carte magnétique ou d'une carte à mémoire électronique ou analogue, cette carte mémorisant en particulier un solde qui, à partir d'un montant initial, est décrémenté à chaque fois que le détenteur de la carte veut laisser son véhicule en stationnement.

Dans le cas du stationnement en voierie, le type de système de gestion du stationnement payant le plus courant est le suivant : des bornes sont installées le long de la voie pour contrôler chacune, plusieurs emplacements de stationnement. Lorsqu'un automobiliste veut laisser son véhicule en stationnement, il introduit dans la borne un montant d'argent, soit sous forme de pièces de monnaie, soit à l'aide d'une carte prépayée, qui lui donne droit à un certain temps de stationnement autorisé, l'heure limite de stationnement autorisé correspondante étant affichée par la borne. La borne délivre alors à l'automobiliste un ticket portant différentes informations imprimées et notamment l'heure limite de stationnement autorisé. L'automobiliste doit placer ce ticket derrière le pare-brise de son véhicule. Le préposé à la surveillance du stationnement a donc simplement à comparer l'heure mentionnée sur le ticket à l'heure présente pour savoir si le véhicule est en stationnement régulier ou non.

Ce type de système de gestion du stationnement présente pour l'usager l'avantage d'être très clair puisque l'heure limite de stationnement autorisé apparaît très distinctement sur le ticket qu'il a reçu. En outre une éventuelle verbalisation se fera également sur la base de cette information imprimée sur le ticket. Un tel système est donc très bien accepté par les usagers car il a le mérite de la transparence.

Il est souvent difficile pour un automobiliste de prévoir à l'avance le temps durant lequel son véhicule va effectivement rester en stationnement. Lorsqu'il introduit dans la borne le montant correspondant à la durée de stationnement qu'il souhaite, l'automobiliste risque soit de sous-évaluer le temps de stationnement dont il a besoin, et il fera alors l'objet d'une verbalisation, soit de surévaluer le temps de stationnement dont il a besoin et il aura effectué un paiement trop élevé par rapport au temps effectif de stationnement.

Afin de supprimer ce risque, et donc d'inciter les automobilistes à respecter les règles du stationnement payant, on a proposé des systèmes de gestion de stationnement payant qui permettent à l'usager de ne payer que pour le temps effectif de stationnement. Ces sytèmes sont basés, en général, sur une prise de caution, correspondant au temps de stationnement maximal autorisé, lorsque l'automobiliste laisse son véhicule en stationnement, et la restitution du trop versé, s'il existe, lorsque l'automobiliste retire son véhicule de l'emplacement de stationnement payant.

Si ce type de systèmes de gestion de stationnement payant satisfait pleinement les automobilistes, il complique le contrôle de la régularité du stationnement des véhicules. En effet une fraude possible consiste à récupérer un trop-perçu après le prélèvement de la caution tout en laissant son véhicule en stationnement. Il est donc nécessaire que le sytème de gestion du stationnement fournisse au préposé à la surveillance non seulement l'information d'heure limite de stationnement autorisé correspondant à la prise de caution mais également une information indiquant qu'éventuellement un automobiliste a laissé son véhicule en stationnement alors qu'en fait il a récupéré indûment un trop-perçu. Pour éviter cette fraude il est nécessaire que le préposé à la surveillance puisse identifier les cautions valides. Il est donc nécessaire d'identifier directement ou indirectement les véhicules en stationnement. Cela peut se faire sur la base d'un numéro d'identification associé à la carte de paiement, d'un numéro de place de stationnement ou du numéro d'immatriculation du véhicule.

Un tel système de gestion par support d'informations du stationnement de véhicules est par exemple décrit dans la publication EP-A-0 206 884. Celui-ci comprend:
- une pluralité de supports d'informations portables, chaque support d'informations étant détenu par un utilisateur de véhicule et comportant au moins une zone de mémoire pour mémoriser des soldes successifs;
- au moins une borne de stationnement (200) pour contrôler une pluralité d'emplacements de stationnement comprenant : des moyens (210, 212) pour lire et écrire des informations dans la mémoire dudit support ; des moyens pour élaborer une information de montant prédéterminé lorsque l'utilisateur introduit un support d'informations dans la borne pour initialiser une période de stationnement ; des moyens pour élaborer une information d'heure limite de stationnement autorisée en fonction d'une information de temps présent et dudit montant prédéterminé ; des moyens (220) pour élaborer un nombre pseudo aléatoire à partir du numéro d'identification de la carte et d'un numéro d'identification de la borne de stationnement, des moyens pour mémoriser dans une mémoire de la borne des ensembles d'informations formés au moins par l'information d'heure de fin de stationnement autorisé et ledit nombre pseudo aléatoire, des moyens d'impression (216) pour délivrer à l'utilisateur un ticket (218) destiné à être placé en évidence dans le véhicule, ledit ticket (218) comportant ladite information d'heure limite de stationnement autorisé et ledit nombre pseudo aléatoire; et des moyens de gestion de caution comprenant des moyens pour, en réponse à l'introduction d'un support d'information en vue de mettre fin au stationnement, lire le montant prédéterminé mémorisé, des moyens pour élaborer un montant effectif correspondant au temps effectif de stationnement, des moyens pour modifier le solde mémorisé dans le support pour aue la diminution dudit solde soit égale audit montant effectif ; et des moyens pour effacer de la mémoire de la borne les ensembles d'informations formés au moins par l'information d'heure de fin de stationnement autorisé et ledit nombre pseudo aléatoire; et,
- des moyens de contrôle (14,102) mis à la disposition du préposé chargé de la surveillance du stationnement pour accéder auxdits ensembles d'informations.

Cependant, ces systèmes sont plus complexes et risquent d'entraîner des erreurs dans le contrôle du stationnement payant.

Un objet de l'invention est de fournir un système de gestion de stationnement payant par cartes qui utilise des tickets à placer derrière le pare-brise des véhicules afin de conserver l'avantage de la transparence pour l'utilisateur et qui, de plus, autorise celui-ci à ne payer le stationnement que pour sa durée effective tout en fournissant au préposé à la surveillance tous les moyens pour vérifier la régularité du stationnement des véhicules.

Ce but est atteint, selon l'invention, grâce à un système de gestion du stationnement comprenant :
- une pluralité de supports d'informations portables, chaque support d'informations étant détenu par un utilisateur de véhicule et comportant au moins une zone de mémoire pour mémoriser des soldes successifs ;
- au moins une borne de stationnement pour contrôler une pluralité d'emplacements de stationnement comprenant :
   des moyens pour lire et écrire des informations dans la mémoire dudit support ; des moyens pour élaborer une information de montant prédéterminé lorsque l'utilisateur introduit un support d'informations dans la borne pour initialiser une période de stationnement ; des moyens pour élaborer une information d'heure limite de stationnement autorisé en fonction d'une information de temps présent et dudit montant prédéterminé ; des moyens pour élaborer une information de rang de ladite opération ; des moyens d'impression pour délivrer à l'utilisateur un ticket destiné à être placé en évidence dans le véhicule, ledit ticket comportant ladite information d'heure limite de stationnement autorisée et ladite information de rang ; et des moyens de gestion de caution comprenant des moyens pour, en réponse à l'introduction d'un support d'information en vue de mettre fin au stationnement, lire le montant prédéterminé mémorisé, des moyens pour élaborer un montant effectif correspondant au temps effectif de stationnement, des moyens pour modifier le solde mémorisé dans le support pour que la diminution dudit solde soit égale audit montant effectif ; des moyens pour lire l'information de rang ; et des moyens pour mémoriser dans une mémoire de la borne des ensembles d'informations formés au moins par ladite information de rang et l'information d'heure de fin de stationnement autorisé ; et,
- des moyens de contrôle mis à la disposition du préposé chargé de la surveillance du stationnement pour accéder auxdits ensembles d'informations.

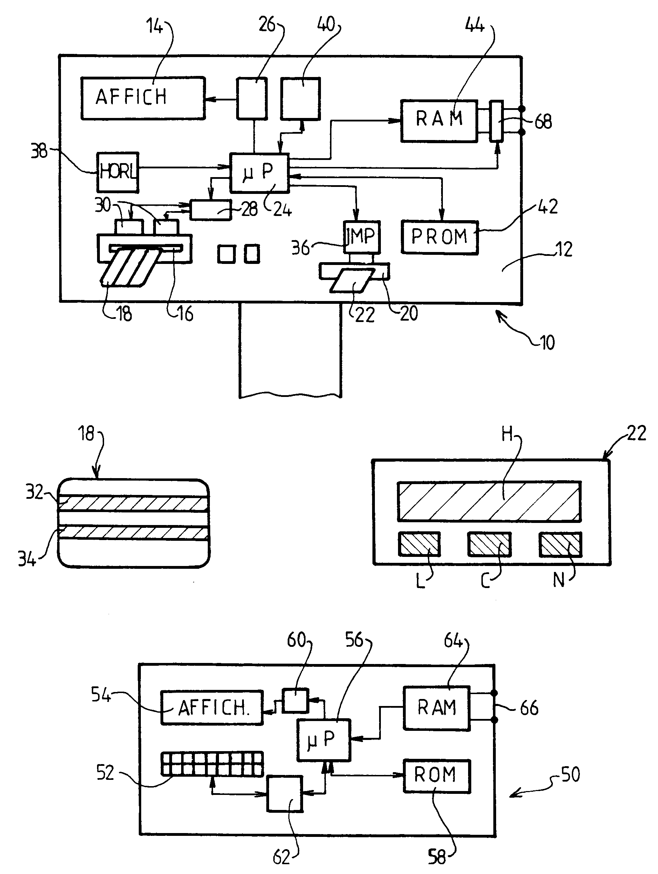

De toutes façons l'invention sera mieux comprise à la lecture de la description qui suit de plusieurs modes de réalisation de l'invention donnés à titre d'exemples non limitatifs. La description se réfère à la figure unique annexée qui montre un mode de réalisation du système de gestion de stationnement selon l'invention.

Avant de décrire en détails plusieurs modes de réalisation de l'invention, on va en décrire ci-après le principe. Le paiement est effectué à l'aide d'une carte à piste magnétique ou d'une carte à mémoire électronique pré-payée.

Le paiement peut également être effectué à l'aide d'une carte bancaire comportant une zone de mémoire du type porte-monnaie électronique ou une zone spécifique de mémoire pour stocker le crédit rendu en fin de stationnement.

Lorsque l'automobiliste veut initialiser une période de stationnement il introduit sa carte dans la borne de stationnement. Un montant prédéterminé ou montant de caution est élaboré par la borne. Ce montant correspond de préférence à la durée maximale de stationnement autorisé. Ce montant dépend donc de la durée maximale et du taux horaire en vigueur. Ce montant constitue une "caution" qui est soit effectivement retranchée du solde disponible dans la carte, soit simplement mémorisée dans la carte ou dans la borne sans que le solde soit modifié. Simultanément la borne élabore un numéro de rang ou d'ordre de prélèvement de caution. A partir du montant prédéterminé et de l'heure à laquelle la carte est introduite dans la borne une heure limite de stationnement autorisé est calculée. La borne est munie d'une imprimante qui délivre à l'usager un ticket portant, outre l'indication de l'année et du jour, l'heure limite de stationnement autorisé, le numéro de la borne, le rang de prise de caution et le montant de la caution prélevée. Ce ticket est alors placé derrière le pare-brise du véhicule. Lors de cette première introduction de la carte dans la borne deux processus principaux différents peuvent être mis en oeuvre : le montant de la caution est prélevé sur le solde disponible de la carte, et les informations relatives au montant de la caution au rang de la prise de caution et au montant de la caution sont également mémorisées ; le montant de la caution, le rang de la prise de caution et le numéro de la borne sont mémorisés sur la carte et/ou dans la borne mais le montant de la caution n'est pas déduit du solde disponible dans la carte. Lorsque l'automobiliste veut reprendre son véhicule deux situations se présentent : soit l'heure limite de stationnement autorisé n'est pas atteinte et l'automobiliste va pouvoir récupérer le trop-perçu, soit l'heure limite de stationnement autorisé est atteinte et l'automobiliste se contente de reprendre son véhicule sans repasser par la borne de stationnement. Dans le premier cas envisagé l'automobiliste doit réintroduire sa carte dans la borne pour bénéficier du paiement en fonction du temps effectif de stationnement. Selon le premier mode de mise en oeuvre la borne calcule la différence entre l'heure effective de fin de stationnement et l'heure limite de stationnement autorisé. Cette durée est convertie en un montant correspondant et le solde mémorisé dans la carte est augmenté de ce montant. Simultanément les informations de rang de prélèvement de caution et de montant de caution peuvent éventuellement être effacées de la carte, et l'heure de retrait de caution est mémorisée dans la carte. En outre, la borne mémorise le rang de prise de caution, le numéro de la borne et l'heure de retrait de la caution. Selon le deuxième mode de mise en oeuvre la borne calcule le temps effectif de stationnement et le montant correspondant. Ce montant est retranché du solde disponible dans la carte. Les mêmes informations que dans le premier mode de mise en oeuvre de l'invention sont mémorisées sur la carte et/ou dans la borne. Simultanément les mêmes informations que dans le premier mode de mise en oeuvre de l'invention sont mémorisées dans la carte ou dans la borne.

Comme on le constate aisément le premier mode de mise en oeuvre implique un grand nombre de modifications des informations mémorisées dans la carte notamment en ce qui concerne les soldes successifs. Un tel mode de mise en oeuvre est donc bien adapté au cas où les cartes sont à piste magnétique. Dans le deuxième mode de mise en oeuvre les informations mémorisées sont moins nombreuses. Il s'adapte donc bien au cas où la carte est du type à mémoire électronique (par exemple des mémoires du type EPROM). Quelque soit le mode de mise en oeuvre considéré, lors de la première insertion de la carte, l'usager reçoit un ticket portant les indications d'heure limite de stationnement autorisé, le numéro de bornes (s'il y en a plusieurs) et de numéro de rang de prise de caution. Si l'automobiliste a récupéré sa caution, dans tous les cas, la borne contient en mémoire le rang de la prise de caution, le numéro de la borne concernée, et l'heure de fin de stationnement, c'est-à-dire l'heure de remboursement du trop-perçu.

Le contrôle du stationnement par le préposé se fait, de préférence, de la manière suivante. Avant d'effectuer sa ronde il charge dans la mémoire d'un terminal portable les ensembles d'informations mémorisés dans une borne constitués par le rang de prise de caution, le numéro de borne de la prise de caution et l'heure de fin de stationnement (remboursement de la caution). Lors de sa ronde le préposé vérifie d'abord, de façon classique, les heures limites de stationnement autorisé imprimées sur les tickets. Si l'heure limite est dépassée, le véhicule est en infraction et le préposé verbalise. Si l'heure limite n'est pas dépassée, le préposé doit s'assurer que l'automobiliste n'a pas récupéré indûment un trop-perçu tout en laissant son véhicule en stationnement. Pour cela il relève sur le ticket le rang de prise de caution et le numéro de borne. Si ce couple d'informations ne figure pas dans la mémoire de son terminal, il y a présomption que la caution n'a pas été reprise et le préposé ne verbalise pas. Si ce couple d'informations apparaît dans la mémoire du terminal c'est que l'automobiliste a fraudé sciemment en récupérant sa caution sans retirer son véhicule de l'emplacement de stationnement. Il est possible qu'un automobiliste effectue un remboursement de caution à une autre borne que celle où il introduit sa carte initialement. Si l'automobiliste a fraudé cette situation sera détectée lorsque le préposé chargera dans son terminal les informations contenues dans la borne où le retrait frauduleux de caution a été effectué, cette dernière étant nécessairement proche de celle où a eu lieu la première introduction.

Si l'on revient au deuxième mode de mise en oeuvre de l'invention, on a noté que la caution n'est pas retranchée du solde de la carte mais qu'elle est simplement mémorisé dans la carte. Si l'automobiliste ne réintroduit pas sa carte dans la borne à la fin du stationnement de son véhicule, le solde mémorisé dans la carte n'a donc pas été diminué du montant de la caution. Le prélèvement de cette caution sera effectué lorsque l'automobiliste introduira sa carte dans une borne pour une nouvelle période de stationnement du fait que le montant de la caution à prélever est soit mémorisé dans la carte soit mémorisé dans la borne. Il est important de souligner que, en ce qui concerne le contrôle du retrait de caution, celui-ci est basé sur la détection d'une fraude et non sur la vérification d'une situation licite. Plus précisément la détection d'un éventuel retrait frauduleux de caution est basée sur la liste des retraits de caution mémorisée dans la borne.

En conséquence, en cas de défaillance du fonctionnement de la borne, le seul risque est qu'un retrait de caution ne soit pas mémorisé, situation dont la seule conséquence est qu'un automobiliste en infraction ne sera pas verbalisé.

En se référant maintenant à la figure unique, on va décrire le premier mode de mise en oeuvre de l'invention. Le système comprend en général une pluralité de bornes de stationnement telles que 10. Le boitier 12 de la borne 10 comprend essenbtiellement sur sa face avant un dispositif d'affichage 14, une fente 16 d'introduction de cartes magnétiques 18 ou à mémoire électronique et une fente 20 de sortie de tickets de stationnement 22. L'intérieur du boitier 12 comprend un certain nombre de circuits et de composants. Il comprend un microprocesseur 24 qui est relié au circuit de commande 26 de l'afficheur 14. Le microprocesseur 24 est encore relié au circuit de commande 28 du dispositif 30 de lecture/écriture dans la carte 18 lorsque celle-ci est introduite dans la fente 16. Dans l'exemple décrit la carte 18 est du type à deux pistes magnétiques 32 et 34. Il pourrait tout aussi bien s'agir d'une carte à mémoire électronique ou d'une carte magnétique à une seule piste. On trouve également une imprimante 36 commandée par le microprocesseur 24 et qui délivre des tickets 22 par la fente 20. Le microprocesseur 24 reçoit une information de temps présent délivrée par le circuit d'horloge 38. Le microprocesseur 24 est encore relié à un générateur de nombres consécutifs 40 constituant les rangs de prise de caution. Il est, par exemple, remis à zéro chaque jour. Au microprocesseur 24 est également associée une mémoire de programmes et de données 42 qui est de préférence du type PROM. Cette mémoire 42 contient d'une part des programmes nécessaires au déroulement des séquences qui seront décrites ultérieurement et d'autre part des tableaux de données notamment pour convertir des informations de temps et de durée en montants de taxes de stationnement. Enfin on trouve une mémoire volatile 44 pour mémoriser des ensembles d'informations comme cela sera expliqué ultérieurement.

Le système de gestion comprend enfin un terminal portable 50 mis à la disposition du préposé à la surveillance. Sur sa face avant le terminal comprend un clavier 52 et un afficheur 54. Les circuits du terminal 50 comprennnent essentiellement un microprocesseur 56 associé à une mémoire de programme 58 qui est par exemple du type ROM. Le microprocesseur 56 est relié au circuit de commande 60 de l'afficheur 54 et au circuit de commande et de décodage 62 du clavier 52. En outre, le terminal 50 comporte une mémoire vive (du type RAM) 64. Des moyens 66 et 68 sont prévus sur le terminal et sur le boitier 12 de la borne 10 pour permettre le transfert des informations contenues dans la mémoire 44 de la borne vers la mémoire 64 du terminal. Ces moyens peuvent être filaires. Ils peuvent également consister en un émetteur-récepteur de faisceau infra-rouge codé.

On va maintenant expliquer le fonctionnement du système de gestion, selon le premier mode de réalisation, représenté sur la figure. Pour les besoins de la description qui suit on va supposer que l'automobiliste qui veut laisser son véhicule en stationnement détient une carte 18 qui n'a pas encore servi. La piste magnétique 32 contient une information de solde SO qui correspond au prépaiement initial effectué par l'automobiliste. Celui-ci introduit sa carte 18 dans la fente 16 du lecteur 30. Le microprocesseur 24 commande la lecture du solde 50 mémorisé dans la carte. Simultanément, à partir de l'information de temps présent délivré par le circuit 38 et des tables contenues dans la mémoire 42, le microprocesseur calcule l'heure limite de stationnement autorisé en ajoutant la duré maximale de stationnement permis à l'information de temps présent ainsi que le montant correspondant ci-après appelé caution. Le microprocesseur commande l'affichage de l'heure limite de stationnement autorisé par l'afficheur 14. Lorsque l'automobiliste a validé cette information, les séquences suivantes se déroulent : le générateur 40 délivre une information de rang de transaction qui est par exemple le rang de prise de caution depuis le début de la journée ; le microprocesseur 24 commande le circuit de lecture-écriture 30 pour retrancher du solde initial S_{O} le montant C de la caution ce qui donne un nouveau solde S′₁, en outre le circuit 30 inscrit sur la piste 34 le montant de la caution C, l'heure limite de stationnement autorisé, le numéro de la borne de stationnement, l'information de rang ainsi que le tarif utilisé. Aucune information n'est mémorisée dans la borne. Le microprocesseur 24 commande également l'imprimante 36 pour délivrer un ticket 22 que l'automobiliste doit placer derrière le pare-brise de son véhicule. Le ticket 22 comporte les mentions habituelles H consistant dans l'année, le mois, le jour et l'heure limite de stationnement autorisé. Il comporte en outre en claire, l'information L de rang de transaction, l'information C de montant de caution et l'information N de numéro de borne de stationnement. Le montant de la caution C peut être variable si la durée maximale de stationnement est fixe et que le taux horaire est variable. Le montant de la caution C peut également être assimilé à un montant variable si la borne de stationnement autorise la fonction suivante : si le solde encore disponible dans la carte est inférieur au montant normal de la caution C, la borne considérera le solde encore disponible C′ comme un montant de caution. Dans ces deux cas il est évidemment indispensable que le montant C ou C′ de caution soit mémorisé dans la carte. En revanche si la caution C est d'un montant fixe, C n'a pas besoin d'être mémorisée.

Lorsque l'automobiliste veut retirer son véhicule de l'emplacement de stationnement, il doit au préalable s'il veut bénéficier du remboursement du trop-perçu, introduire sa carte 18 dans le lecteur 30 de la borne 10 où il avait introduit initialement sa carte ou dans le lecteur d'une borne voisine. Après l'introduction de la carte 18, le microprocesseur commande la lecture des informations L, C, N mémorisées sur la piste 34 de la carte. Le microprocesseur 24, à partir de l'information H et de l'informaiton de temps présent délivrée par le circuit 38, calcule la durée de stationnement non utilisée et le montant correspondant R. Il modifie alors, via le lecteur 30, le solde mémorisé sur la piste 32 en ajoutant au solde précédent S′₁ le montant R à rembourser ce qui donne le nouveau solde S₁. Simultanément le lecteur 30 inscrit sur la piste 34 de la carte, l'heure du retrait de caution et le numéro de la machine où le retrait a été effectué. De préférence les informations d'entrée sont également mémorisées. Enfin le microprocesseur 24 commande l'inscription dans la mémoire 44 d'un ensemble d'informations consistant dans l'information L de rang de caution, le numéro N de la machine de prise de caution et l'heure limite de stationnement correspondant au montant effectivement payé. La mémoire 44 contient ainsi une pluralité d'ensembles d'informations consistant chacun en l'information de rang L et le numéro de borne N de prise de caution. On voit donc que dans la mémoire 44 de chaque borne de stationnement on trouve pour chaque retrait de caution un couple d'informations constitué par le numéro N de borne et le rang L de prise de caution. En revanche si l'automobiliste ne réintroduit pas sa carte pour récupérer une partie de sa caution, aucune information relative au stationnement de ce n'est mémorisée. En outre, lorsque l'automobiliste réintroduit sa carte pour récupérer le trop-perçu, le microprocesseur 24 commande également l'imprimante 36 pour que celle-ci délivre à l'usager un justificatif de paiement qui comporte notamment le montant de la taxe effectivement perçue c'est-à-dire C - R.

Selon une variante de ce premier mode de mise en oeuvre de l'invention, la carte comporte, outre une zone mémoire de soldes, une zone mémoire de crédit. Lors de la première introduction de la carte au début d'une période de stationnement le solde disponible S₀ est diminué du montant de la caution C ce qui donne un nouveau solde S₁ et la mémoire de crédit est à zéro. On mémorise également dans la carte ou dans la borne l'heure de fin de stationnement, le montant, le numéro de caution et le numéro de borne. Certaines de ces informations ne sont pas strictement indispensables pour le fonctionnement du système, mais elles sont utiles pour être confrontées aux indications portées sur le ticket en cas de contestations par l'usager. Lors de la deuxième introduction de la carte par l'usager pour récupérer le trop-perçu, si tel est le cas, le solde S1, n'est pas modifié, mais la mémoire de crédit est chargée à la valeur R correspondant au montant à restituer. Lors d'une nouvelle introduction de la carte pour une nouvelle période de stationnement, le solde S₁ est modifié pour prélever la nouvelle caution C et pour ajouter le montant R mémorisé dans la mémoire de crédit ce qui donne un nouveau solde S₂, et la mémoire de crédit est remise à zéro. Dans le cas où la carte peut servir à effectuer d'autres paiements que pour le stationnement, le lecteur de la machine correspondant diminue le solde S₁ du montant P et ajoute le montant R stocké dans la mémoire de crédit puis celle-ci est remise à zéro. L'avantage de cette variante est que le solde dans la mémoire principale de la carte ne peut que diminuer.

Lorsque le préposé à la surveillance veut effectuer un contrôle, il procéde de la manière suivante : devant une borne 10 il charge dans la mémoire 64 de son terminal 50 tous les ensembles d'informations contenus dans la mémoire 44 de la borne, puis il commence sa ronde. Pour chaque véhicule en stationnement il vérifie que l'heure limite de stationnement autorisé H imprimée sur le ticket n'est pas dépassée. Si tel est bien le cas il doit vérifier que l'automobiliste n'a pas retiré indûment sa caution. Pour cela, il entre à l'aide du clavier 52, l'information de rang L et le numéro de borne N imprimés sur le ticket 22. Le microprocesseur 56 du terminal 50 compare ce couple d'informations à la liste des couples d'informations mémorisés dans la mémoire 64. Si le couple d'informations entré dans le terminal figure dans cette liste, c'est que le propriétaire du véhicule a retiré indûment sa caution sans avoir enlevé son véhicule de l'emplacement de stationnement. Il y a donc fraude délibérée. L'afficheur 54 du terminal informe le préposé de cette situation. Si le couple d'informations ne figure pas dans la liste mémorisée il y a présomption de non-retrait de caution et le préposé ne verbalise pas. Il est possible que l'automobiliste est effectué un retrait de caution à une autre borne. Cette situation sera détectée lorque le préposé chargera dans son terminal le contenu de la mémoire de la borne concernée. Toutefois la possibilité donnée à l'utilisateur de retirer le trop perçu dans une autre borne que celle où il a introduit sa carte la première fois est limitée aux bornes proches de celles où il a effectué cette première opération. Pour mettre en oeuvre cette limitation chaque borne comporte dans sa mémoire 42 non seulement son propre numéro de borne mais également les numéros d'un nombre limité de bornes considérées comme proches. Dans ce mode de mise en oeuvre, lors de la première introduction de la carte le numéro de la borne et les numéros des bornes "proches" sont mémorisés dans la carte. Lorsque l'usager réintroduit sa carte dans une autre borne pour reprendre sa caution, le lecteur de cartes lit tous les numéros de bornes mémorisés dans la carte. Si le numéro de la borne où a lieu cette deuxième insertion ne figure pas dans la liste mémorisée dans la carte, la carte est refusée, et l'usager doit se rendre dans une autre borne effectivement considérée comme proche.

En variante il est possible de mettre en oeuvre le système sans utiliser de terminal portable 50. Dans ce cas, lorsqu'il passe devant une borne de stationnement, le préposé commande l'impression sur ticket spécial de la liste des ensembles d'informations contenus dans la mémoire 44 de la borne. Il se sert alors de cette liste imprimée pour vérifier d'éventuels retraits frauduleux de cautions par comparaison directe entre les couples d'informations de la liste et le couple d'informations imprimé sur le ticket.

Dans un deuxième mode de mise en oeuvre de l'invention le montant de la caution C n'est pas retranché du solde de la carte 18 lors de l'introduction initiale de la carte, mais il est simplement mémorisé dans cette carte, la modification du solde n'intervenant que lorsque l'automobiliste réintroduit sa carte pour payer la taxe correspondant au temps effectif de stationnement.

Au cas où l'automobiliste ne réintroduirait pas sa carte à la fin du stationnement, le montant C de la caution est retranché du solde disponible lors de l'utilisation suivante de la carte.

En se référant à la figure unique on va décrire ce deuxième mode de mise en oeuvre.

Pour initier une période de stationnement, l'automobiliste introduit sa carte dans le lecteur 16, 30 de la borne 10. Le lecteur 30, sous le contrôle du microprocesseur 24, lit les informations contenues dans la mémoire de la carte 18. Si parmi ces informations il figure une information C de caution, le microprocesseur 24 commande la décrémentation de l'information de solde disponible d'un montant égal à C et l'effacement de l'information de caution. Puis, pour la nouvelle opération de stationnement, le microprocesseur 24 commande le déroulement des opérations déjà décrites en liaison avec le premier mode de mise en oeuvre. La seule différence réside dans le fait que la caution C pour cette nouvelle opération de stationnment n'est pas retranchée du solde disponible mais il est mémorisé dans une zone spécifique de la mémoire de la carte. Lorsque l'automobiliste veut retirer son véhicule de l'emplacement de stationnement et récupérer l'équivalent du "trop-perçu", celui-ci doit introduire à nouveau sa carte dans le lecteur de la borne ou d'une borne voisine. Le lecteur lit les informations contenues dans la mémoire de la carte. Il constate que l'heure limite de stationnement autorisé n'est pas encore atteinte. Il détermine la durée effective de stationnement et calcule le montant correspondant. Ce montant est retranché du solde disponible précédemment mémorisé dans la carte, et le montant de la caution est effacé. Comme dans le premier mode de mise en oeuvre, lors du retrait de la caution, le microprocesseur commande l'inscription dans la mémoire 44 des informations de rang L de numéro de borne N et d'heure de retrait de caution. Le contrôle de la régularité du stationnement se fait comme dans le cas du premier mode de mise en oeuvre de l'invention. En outre lorsque les informations sont mémorisées dans la borne, la carte doit comporter un numéro d'identification. Ce numéro est mémorisé dans la mémoire 44 de la borne en même temps que les autres informations.

Dans ce deuxième mode de mise en oeuvre de l'invention il est possible d'utiliser la variante déjà décrite en liaison avec le premier mode de mise en oeuvre. Selon cette variante les opérations, lors de la première introduction de la carte, ne sont pas modifiées. En d'autres termes le solde S_{O} n'est pas modifié et le montant C de la caution est mémorisé dans une zone spécifique de la mémoire, et la mémoire de crédit est à zéro.

Lors de la deuxième introduction de la carte, à la fin de la période de stationnement, le solde disponible S_{O} est diminué du montant de la caution, et le trop-perçu R est chargé dans la mémoire de crédit. Simultanément le montant de la caution C est effacé de la zone spécifique de la mémoire.

Le plus souvent la réglementation du stationnement payant interdit à un automobiliste qui a déjà laissé son véhicule en stationnement à un emplacement donné pendant la durée maximum autorisée, d'acquitter une nouvelle taxe pour laisser à nouveau son véhicule en stationnement à ce même emplacement. Selon une variante de mise en oeuvre du système de gestion de stationnement, les bornes de stationnement peuvent réaliser cette interdiction. Lors d'une première insertion de carte pour initialiser une période de stationnement le microprocesseur 24 de la borne lit, via le lecteur 30, les informations contenues dans la carte et notamment l'heure limite de stationnement effectif précédente, s'il y a eu reprise de caution, ou l'heure limite de stationnement autorisé précédente, dans le cas contraire. Par la mise en oeuvre d'un sous programme stocké dans la mémoire 42, le microprocesseur 24 compare l'information horaire lue dans la carte 18 à l'information de temps présent délivrée par le cirvuit d'horloge 38. Si la différence entre ces deux informations horaires est inférieure à un seuil prédéterminé, par exemple un quart d'heure, et si de plus le numéro de borne lu dans la carte est identique à celui que porte la borne où a lieu la nouvelle insertion, le microprocesseur 24 refuse la carte et commande le lecteur de carte 30 pour qu'il la restitue à l'usager.

Selon les modes de mise en oeuvre décrits précédemment la carte sert, outre à mémoriser des soldes successifs, à stocker des informations servant à gérer le prélèvement de la caution, et la restitution du trop-perçu. Dans le cas paerticulier où le contrôle du stationnement est effectué à l'aide d'une seule borne (cas d'un parking en ouvrage) ou dans le cas où les différentes bornes sont interconnectées entre elles (voir par exemple le brevet français 2.584.515) c'est-à-dire dans le cas où toute information introduite dans une borne est transmise aux autres bornes, il est possible de ne mémoriser les informations de rang de prise de caution, de montant de caution, d'heure limite de stationnement autorisé que dans la mémoire de la borne et pas dans celle de la carte. L'identification de l'usager se fait alors par un numéro d'identification mémorisé en permanence dans la carte.

## Revendications

1. Système de gestion par support d'informations du stationnement de véhicules, comprenant :
- une pluralité de supports d'informations portables (18), chaque support d'informations (18) étant détenu par un utilisateur de véhicule et comportant au moins une zone de mémoire (32) pour mémoriser des soldes successifs (50);
- au moins une borne de stationnement (10) pour contrôler une pluralité d'emplacements de stationnement comprenant : des moyens pour lire et écrire (30) des informations dans la mémoire dudit support ; des moyens (24) pour élaborer une information de montant prédéterminé (C) lorsque l'utilisateur introduit un support d'informations (18) dans la borne pour initialiser une période de stationnement ; des moyens (24) pour élaborer une information d'heure limite de stationnement autorisée (H) en fonction d'une information de temps présent et dudit montant prédéterminé (C) ; des moyens (40) pour élaborer une information de rang (L) de ladite opération ; des moyens d'impression (36) pour délivrer à l'utilisateur un ticket (22) destiné à être placé en évidence dans le véhicule, ledit ticket comportant ladite information d'heure limite de stationnement autorisé (H) et ladite information de rang (L); et des moyens (24) de gestion de caution comprenant des moyens pour, en réponse à l'introduction d'un support d'information (18) en vue de mettre fin au stationnement, lire le montant prédéterminé mémorisé (C), des moyens pour élaborer un montant effectif correspondant au temps effectif de stationnement, des moyens (30) pour modifier le solde mémorisé dans le support pour que la diminution dudit solde soit égale audit montant effectif ; des moyens (30) pour lire l'information de rang ; et des moyens pour mémoriser dans une mémoire (44) de la borne des ensembles d'informations formés au moins par ladite information de rang (L) et l'information d'heure de fin de stationnement autorisé (H) ; et,
- des moyens de contrôle (50) mis à la disposition du préposé chargé de la surveillance du stationnement pour accéder auxdits ensembles d'informations.

2. Système selon la revendication 1 caractérisé en ce qu'il comprend une pluralité de bornes de stationnement (10), en ce que chaque borne comporte une information d'identification (N), et en ce que l'information d'identification (N) est associée à l'information de rang (L) liée à ladite borne et est imprimée sur ledit ticket (22), mémorisée dans la mémoire (34) du support d'informations (18) et mémorisée dans la mémoire (44) de la borne (10) en même temps que ladite information d'ordre.

3. Système selon la revendication 2, caractérisé en ce que les dits moyens de contrôle comprennent un dispositif portable (50) muni d'une mémoire (64), des moyens (56) pour permettre audit préposé de transférer de la mémoire (44) de la borne à la mémoire (64) dudit dispositif portable (50) les ensembles d'informations formés chacun par l'information d'heure de fin de stationnement (H), l'information de rang (L) et l'information d'identification d'une borne (N), des moyens de visualisation (54), et des moyens (52) pour commander la visualisation d'un ensemble d'informations correspondant à une information de rang (L) et d'identification de borne (N).

4. Système selon l'une quelconque des revendications 1 à 3, caractérisé en ce que, lors de l'introduction du support d'informations (18) dans une borne (10) pour initialiser une période de stationnement, les moyens de lecture et d'écriture (30) décrémentent le solde mémorisé (50) dans le support dudit montant prédéterminé (C), et en ce que, lors de l'introduction d'un support d'information (18) pour mettre fin à une période de stationnement, le solde mémorisé (51) dans le support d'information est crédité d'un montant égale à la différence entre ledit montant prédéterminé (C) et le montant correspondant au temps effectif de stationnement.

5. Système selon l'une quelconque des revendications 1 à 3 caractérisé en ce que lors de l'introduction du support d'informations (18) dans une borne (10) pour initialiser une période de stationnement, les moyens de lecture et d'écriture (30), mémorise dans le support (18) une information de montant prédéterminé (C), sans modifier le solde (50) dudit support, et en ce que, lors de l'introduction d'un support d'information (18) pour mettre fin à une période de stationnement, la borne vérifie que le coût du temps effectif de stationnement n'est pas supérieur au montant prédéterminé mémorisé (C) et diminue le solde (50) du support d'un montant correspondant au temps effectif de stationnement et supprime l'information de montant prédéterminé (C).

6. Système selon la revendication 5, caractérisé en ce que lors de l'introduction du support d'informations (18) dans une borne pour initialiser une période de stationnement les moyens de lecture et d'écriture (30) vérifient si le support comporte une information de montant prédéterminé (C) et, dans l'affirmative, décrémente le solde (50) du support d'informations (18) d'une valeur égale et la dite différence R est effacée de ladite mémoire de crédit et est ajouté au solde précédemment mémorisé.

## Patentansprüche

1. System zur Parkplatzbewirtschaftung mittels Informationsträgern, umfassend:
- mehrere tragbare Informationsträger (18), wobei jeder Informationsträger (18) im Besitz eines Fahrzeugbenutzers ist und zumindest eine Speicherzone (34) zum Speichern aufeinanderfolgender Saldi umfaßt;
- zumindest eine Parksäule (10) zur Überwachung mehrerer Stellplätze, umfassend: Mittel (30) zum Lesen und Schreiben von Information im Speicher des Trägers; Mittel (24) zum Ausarbeiten einer vorgegebenen Betragsinformation, wenn der Benutzer einen Informationsträger (18) in die Säule einführt, um einen Parkzeitraum zu initialisieren; Mittel (24) zum Ausarbeiten einer Information über den Endzeitpunkt der erlaubten Parkdauer (H) in Abhängigkeit von einer Information über die aktuelle Zeit und den vorgegebenen Betrag (C); Mittel (40) zum Ausarbeiten einer Information über den Rang (L) der Operation; Druckmittel (36) zur Ausgabe eines Tickets (22) an den Benutzer, das zum Nachweis im Fahrzeug angeordnet werden soll, welches Ticket die Information über den Endzeitpunkt der erlaubten Parkdauer (H) und die Information über den Rang (L) umfaßt; und Mittel (24) zur Verwaltung der Gebühr, umfassend Mittel, die in Reaktion auf das Einführen eines Informationsträgers (18), um das Parken zu beenden, den gespeicherten vorgegebenen Betrag (C) lesen, Mittel zur Ausarbeitung eines der effektiven Parkdauer entsprechenden Betrages, Mittel (24) zur Modifikation des auf dem Träger gespeicherten Saldos, damit die Verminderung des Saldos gleich dem Effektivbetrag ist; Mittel (30) zum Lesen der Information über den Rang; und Mittel zum Speichern der Gesamtheit der Informationen, bestehend zumindest aus der Information über den Rang (L) und der Information über Endzeitpunkt der erlaubten Parkdauer (H) in einem Speicher (44) der Parksäule ; und
- Kontrollmittel (50), die der Person zur Verfügung stehen, die mit der Überwachung des Parkraumes betraut ist, um an die Gesamtheit der Informationen zu gelangen.

2. System nach Anspruch 1, dadurch gekennzeichnet, daß es mehrere Parksäulen (10) umfaßt und daß jede Parksäule eine Identifikationsinformation (N) aufweist und daß die Identifikationsinformation (N) mit der der Säule zugeordneten Ranginformation (L) assoziiert ist und auf das Ticket (22) gedruckt, im Speicher (34) des Informationsträgers (18) gespeichert und im Speicher (44) der Säule (10) gleichzeitig mit der Auftragsinformation gespeichert wird.

3. System nach Anspruch 2, dadurch gekennzeichnet, daß die Kontrollmittel eine tragbare Einrichtung (50) umfassen, die mit einem Speicher (64), Mitteln (56), die der Aufsichtsperson ermöglichen, vom Speicher (44) der Säule die Gesamtheit der Informationen, bestehend jeweils aus der Information über den Endzeitpunkt der Parkdauer (H), der Ranginformation (L) und der Identifikationsinformation (N) einer Säule auf den Speicher (64) der tragbaren Einrichtung (50) zu übertragen, Mittel zur Sichtbarmachung (54) und Mittel (56) zur Steuerung der Sichtbarmachung einer Gesamtheit von Informationen entsprechend einer Ranginformation (L) und Identifikationsinformation (N) der Säule versehen ist.

4. System nach einem der Ansprüche 1 bis 3, dadurch gekennzeichnet, daß bei Einführung des Informationsträgers (18) in eine Parksäule (10) zur Initialisierung eines Parkzeitraumes die Mittel zum Lesen und Schreiben (30) den gespeicherten Saldo (So) auf dem Träger um den vorgegebenen Betrag (C) dekrementieren und daß bei Einführung eines Informationsträgers (18) zur Beendigung einer Parkdauer dem auf dem Informationsträger (50) gespeicherten Saldo ein Betrag gutgeschrieben wird, der gleich der Differenz (R) zwischen dem vorgegebenen Betrag (C) und dem Betrag entsprechend der effektiven Parkdauer ist.

5. System nach einem der Ansprüche 1 bis 3, dadurch gekennzeichnet, daß bei Einführung des Informationsträgers (18) in eine Säule (10) zur Initialisierung einer Parkdauer die Mittel zum Lesen und Schreiben (30) auf dem Träger (18) eine Information über den vorgegebenen Betrag (C) speichern, ohne den Saldo (So) des Trägers zu verändern, und daß bei Einführung eines Informationsträgers (18) zur Beendigung einer Parkdauer die Parksäule verifiziert, daß die Kosten der effektiven Parkdauer nicht höher als der gespeicherte vorgegebene Betrag (C) sind, und den Saldo (So) des Trägers um einen Betrag vermindert, der der effektiven Parkdauer entspricht und die Information über den vorgegebenen Betrag (C) löscht.

6. System nach Anspruch 5, dadurch gekennzeichnet, daß bei Einführung des Informationsträgers (18) in eine Parksäule zur Initialisierung einer Parkdauer die Mittel zum Lesen und Schreiben (30) verifizieren, ob der Träger eine Information über den vorgegebenen Betrag (C) aufweist und bejahendenfalls den Saldo (So) des Informationsträgers (18) um einen gleichen Wert dekrementieren, und daß die Differenz (R) aus dem Kreditspeicher gelöscht und dem zuvor gespeicherten Saldo hinzugefügt wird.

## Claims

1. Management system with information carriers for vehicle parking, comprising
- a plurality of portable information carriers (18), each information carrier (18) being held by the user of a vehicle and including at least one storage area (32) for storing successive balances;
- at least one parking meter (10) for controlling a plurality of parking spaces, comprising means (30) for reading and writing information in the memory of the said carrier, means (24) for generating information relating to a predetermined amount (C) when the user inserts an information carrier (18) into the meter in order to initialise a parking period, means (24) for generating authorised parking time limit information (H) as a function of present time information and the said predetermined amount (C), means (40) for generating information relating to the sequence number (L) of the said operation, printing means (36) for issuing the user with a ticket (22) intended to be displayed in the vehicle, the said ticket including the said authorised parking time limit information (H) and the said sequence number information (L), and deposit management means (24) comprising means for reading the predetermined amount (C) stored in response to the insertion of an information carrier (18) in order to terminate parking, means for generating an actual amount corresponding to the actual parking time, means (24) for modifying the balance stored in the carrier so that the reduction in the said balance is equal to the said actual amount, means (30) for reading the sequence number information, and means for storing in a memory (44) of the meter sets of information items consisting at least of the said sequence number information (L) and the authorised parking time limit information (H), and
- control means (50) at the disposal of the parking warden in order to access the said sets of information items.

2. System according to claim 1, characterised in that it comprises a plurality of parking meters (10), in that each meter includes identification information (N) and in that the identification information (N) is associated with the sequence number information (L) relating to the said meter and is printed on the said ticket (22), stored in the memory (34) of the information carrier (18) and stored in the memory (44) of the meter (10) at the same time as the said order information.

3. System according to claim 2, characterised in that the said control means comprise a portable device (50) provided with a memory (64), means (56) for allowing the said warden to transfer the sets of information items each consisting of the parking time limit information (H), the sequence number information (L) and the meter identification information (N) from the memory (44) of the meter to the memory (64) of the said portable device (50), display means (54) and means (56) for controlling the display of a set of information items corresponding to sequence number information (L) and meter identification information (N).

4. System according to any one of claims 1 to 3, characterised in that, when the information carrier (18) is inserted into a meter (10) in order to initialise a parking period, the read/write means (30) decrement the balance (S0) stored in the carrier by the said predetermined amount (C) and in that, when an information carrier (18) is inserted in order to terminate a parking period, the balance (S0) stored in the information carrier is credited with an amount equal to the difference (R) between the said predetermined amount (C) and the amount corresponding to the actual parking time.

5. System according to any one of claims 1 to 3, characterised in that, when the information carrier (18) is inserted into a meter (10) in order to initialise a parking period, the read/write means (30) store information relating to a predetermined amount (C) in the carrier (18) without modifying the balance (S0) of the said carrier and in that, when an information carrier (18) is inserted in order to terminate a parking period, the meter checks that the cost of the actual parking time is not greater than the predetermined amount (C) stored and reduces the balance (S0) of the carrier by an amount corresponding to the actual parking time and deletes the information relating to a predetermined amount (C).

6. System according to claim 5, characterised in that, when the information carrier (18) is inserted into a meter in order to initialise a parking period, the read/write means (30) check whether the carrier includes information relating to a predetermined amount (C) and, if it does, decrements the balance (S0) of the information carrier (18) by an equal value and the said difference (R) is erased from the said credit memory and is added to the balance stored previously.
